Europäisches Patentamt

European Patent Office

Office européen des brevets

Publication number: **0 367 651**

A2

# EUROPEAN PATENT APPLICATION

(21) Application number: 89402873.7

(22) Date of filing: 17.10.89

(51) Int. Cl.⁵: **D21H 27/20 , C09J 7/04**

㉚ ·Priority: **17.10.88 FI 884772**

(43) Date of publication of application:
**09.05.90 Bulletin 90/19**

(84) Designated Contracting States:
**DE FR GB NL SE**

(71) Applicant: **O/Y KYRO A/B**

**SF-39200 Kyröskoski(FI)**

(72) Inventor: **Rissanen, Pentti**

**SF-39200 Kyröskoski(FI)**

(74) Representative: **Gillard, Marie-Louise et al
Cabinet Beau de Loménie 55, Rue
d'Amsterdam
F-75008 Paris(FR)**

(54) **Strippable paper, such as wall paper or poster, and method for producing the same.**

(57) A paper strippable from a wall or a like fastening surface, such as wall paper, a poster, a label or the like, carries a release agent (2) on the glueable surface of its backing and to the glueable surface of its backing is applied an agent (3) which is more adhesive than said release agent (2). The outer face of said sizing surface includes areas (2) of release agent and areas (3) of more adhesive agent adjacent to each other in the plane of paper. Said adhesive areas (3) are formed by an agent applied on top of a base web (2) consisting of the release agent, whereby said applied agent can be e.g. some per se known paper coating paste.

EP 0 367 651 A2

## Strippable paper, such as wall paper or poster, and method for producing the same

The present invention relates to a paper strippable from a wall or a corresponding fastening surface, especially to a wall paper or a poster having some release agent on the glueable surface of its backing side. This release agent is hydrophobic in nature.

The above type of paper is one of so-called strippable wall paper products which can be stripped or removed from the wall after gluing, e.g. when replacing the wall papers. This has been achieved primarily in two different techniques:

A) Paper is made of a fibre material that is sufficiently strong (often contains synthetic fibre) to withstand stripping off the wall without tearing. The worst drawback is the high price of synthetic fibres. Some fibres may also remain stuck to the wall after the wall paper is stripped off.

B) Prior to gluing to the wall, the backing of wall paper is subjected to a so-called hydrophobization treatment, including the application of e.g. wax polymer dispersion thereon followed by the application of a water-based paste on top of that. Although the wall paper does not leave marks on the wall as it is stripped off, a drawback is unreliable adherence to the wall because of a variety of wall materials and paste adhesives available.

The invention relates also to a strippable wall paper according to the above item B. In general, the invention also covers all types of paper which are intended to be glued to surfaces as well as to be removed when replacing the paper with a new one, examples of such papers including e.g. various posters, advertisements and labels. Papers of the invention can either be pre-sized with a water-based paste or size, whereby the pre-sizing layer is wet with water when gluing them on or the water-based size can be applied thereon only when doing the actual gluing.

An object of the invention is to introduce a paper that has none of the above drawbacks and this paper is mainly characterized in that the glueable back surface is provided with an agent that is more adhesive than the release agent carried on the glueable surface. The purpose of a release agent is to prevent the glueable surface from adhering too firmly to a fastening surface when using water-based sizes in gluing and the purpose of a more adhesive agent, i.e. a sticking agent, in turn, is to provide the glueable surface with fastening spots whereby the glueable surface can adhere more firmly to the fastening surface. At the same time, the release agent prevents the paper fibres and the paste used in sizing from coming into contact with each other.

According to one preferred embodiment of the invention, the outer face of a glueable surface includes areas of a release agent and areas of a more adhesive agent side by side in the plane of paper. By virtue of this, paper can be fixed to a fastening surface on a spot-gluing principle, the paper adhering more firmly to the fastening surface at the areas covered by the more adhesive agent.

A well-performing assembly is provided by selecting the more adhesive agent so as to include inorganic pigments as well as a binder either together or separately. In terms of manufacturing economy it is then preferred that the more adhesive agent comprises a dried, per se known paper coating paste, whereby the paper production can be practiced by using raw materials generally employed in paper making.

The invention relates also to a method for manufacturing the above type of paper which is strippable off a wall or a corresponding fastening surface. According to the invention, the method is characterized in that the glueable surface is formed by applying, in addition to a release agent, some agent that is more adhesive than said release agent. When it is desired to produce a paper performing on a spot-gluing principle, the more adhesive agent and the release agent are applied in a manner that the glueable surface will be provided with such outer face which carries areas of the release agent and areas of the more adhesive agent side by side in the plane of paper. In practice, the most simple way of doing this is to apply the more adhesive agent as a water-based suspension which builds said areas upon drying.

The invention will now be described in more detail with reference made to the accompanying drawing, in which

fig. 1 shows one embodiment of a paper of the invention in a backside view and

fig. 2 shows the paper of fig. 1 in a section perpendicular to the plane thereof along a line II-II in fig. 1,

fig. 3 shows one embodiment of a paper of the invention in a view similar to fig. 1 and

fig. 4 illustrates paper backing patterns obtained by silk screen printing technique and

fig. 5 shows an alternative embodiment of a paper also obtained by silk screen printing technique in a view similar to fig. 1.

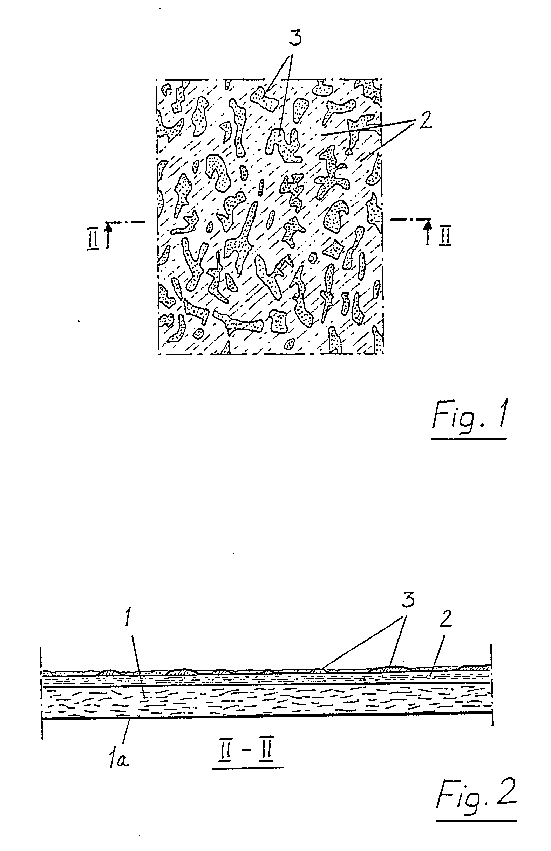

A paper shown in figs. 1 and 2 includes a fibre layer 1 which forms the actual base web and whose front face 1a, which will be visible, carries a printing or said face is prepared for printing. The backing to be set against a wall or a corresponding fastening surface comprises on top of said fibre layer 1 a continuous layer 2 of uniform thickness, made of a hydrophobic material and called a release layer. A release layer 2 can be produced e.g. with various adhesion reducing agents, including hydrophobicity promoting agents such as various wax and polymer dispersions, mixtures of the above agents, various hydrophobization agents such as resin adhesives, neutral and synthetic adhesives, silicones and fluorochemicals. The amount of material used for layer 2 depends on a raw material in question. With polymer waxes, for example, a suitable amount is appr. 3 g/m$^2$ calculated as dry matter of the layer. In addition, the hydrophobicity of this layer can be adjusted by admixing in the above agents some hydrophobicity reducing agents, e.g. carboxy-methyl cellulose (CMC), starch, polyvinyl alcohol, various types of saline and moisturizer mixtures etc. which promote hydrophilicity. In practice, a hydrophobic layer 2 can be produced from the above agents by using normal paper surface sizing or coating equipment, such as a size press, a roll coat er, a jet coater, a rod coater, a blade coater or an air-brush coater, spraying equipment and a printing technique such as silk screen printing.

On top of release layer 2 is applied an agent which in its sizing properties is more adhesive than the agent building said release layer 2. In theory, the better adhesive quality is based on the fact that this more adhesive agent is more hydrophilic than the agent building said release layer 2. The hydrophilic qualities of agents can be determined in many ways, e.g. on the basis of a so-called contact angle, i.e. the angle which a water drop containing a certain amount of water forms with a solid smooth surface made of a material to be tested. The contact angle is a water-drop facing angle formed between the tangent of a water drop and the material surface, said tangent running through the contact point between water drop surface and material surface. The smaller this angle is, the greater is the hydrophilic quality of a material to be tested. The hydrophilic quality of materials or agents can also be compared by measuring the water absorption of a surface formed by a material with conventional measuring techniques.

As shown in fig. 1, the adhesive agent is applied in a manner that the outer face of a glueable surface includes areas of a release agent side by side in the plane of paper and formed by the outer face of said hydrophobic layer 2 as well as areas 3 of an adhesive agent formed by amounts of an adhesive agent on top of said hydrophobic layer 2 (fig. 2). Fig. 1 illustrates further how areas 3 of adhesive agent lie in the direction of the principal plane of paper as islands surrounded by hydrophobic field 2.

The area 3 formed by adhesive agent may consist of an inorganic pigment as well as of a natural or synthetic binder either together or separately whereby said areas, due to the hydrophilic quality caused by the structure thereof, have a high adhesive power to water-based sizes or pastes. In addition, such composition can be readily applied on top of release layer 2. The properties of adhesive agent 3 can be regulated for promoting or reducing adhesive quality by admixing therein e.g. one of the above-mentioned hydrophobicity promoting agents.

According to the preceding paragraph, the adhesive agent may comprise some dried, per se known paper coating paste. This results in a considerable saving in paper making since the raw material, coating paste, used in normal paper processing can be employed as such or admixed with suitable chemicals without having to acquire from elsewhere the raw material needed for the areas of adhesive agent.

The coating paste for building areas 2 of adhesive agent may contain a natural or synthetic binder, pigments, adjuvants such as a dispersing agent, alkali, one of the above-mentioned hydrophobicity promoting agents, hardeners, thickeners as well as anti-foaming agents and anti-deteriorants.

In practice, a paper of the invention can be manufactured by applying release layer 2 on top base web 1 as described above, followed by applying more adhesive agent 3 on top of layer 2 in a manner that the outer face of hydrophobic layer 2 remains more or less exposed. Thus, the adhesive agent can be applied as a water-based suspension which, upon drying, builds hydrophilic areas 3 on top of layer 2. Since the suspension is water-based and layer 2 is water repellent, said suspension contracts in the direction of the plane of paper or "shrinks" and upon drying it builds, as shown in figs. 1 and 2, separate areas slightly raised from the face of layer 2 adjacent to which lie areas or fields provided by the outer face of layer 2. The share of areas 3 of the entire glueable surface area depends on the proportions of the amount of employed suspension to the surface area of paper. In the embodiment shown in fig. 1, areas 3 lie as islands that are completely surrounded by field 2 formed by the release layer. The shape and size of areas 3 can be adjusted by means of the composition, dry matter content and viscosity of the suspension. Naturally these factors can be affected by the composition of a layer forming said face 2 of a release layer.

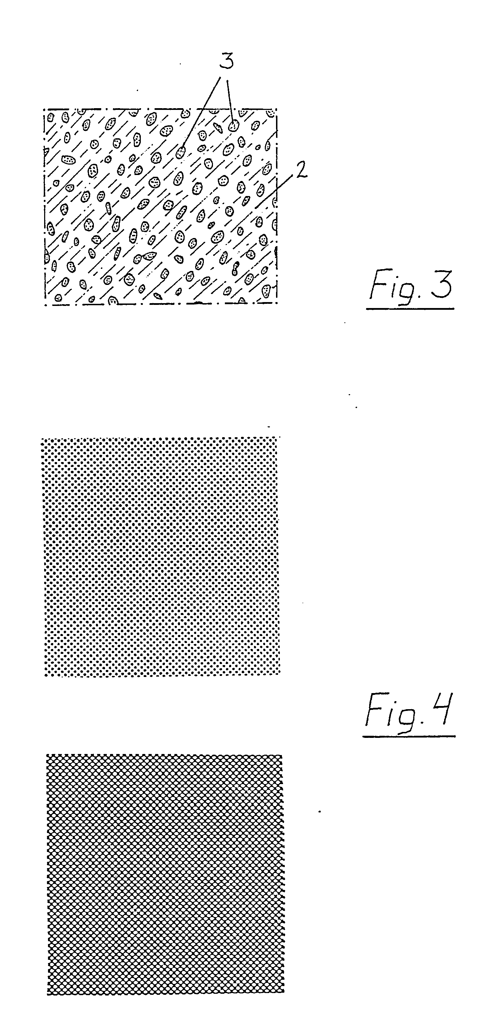

The portion of areas 3 shown in fig. 1 of the entire sizing surface area is appr. 10 % and the individual areas cover appr. 1-5 mm$^2$. The above values may greatly vary and the values are affected by the adhesive paste to be used as well as by the hydrophobic-hydrophilic qualities of material areas 2 and 3. Fig. 3 illustrates a paper in which adhesive areas 3 are smaller, i.e. having a surface area of less than 1 mm$^2$ and

EP 0 367 651 A2

the portion thereof is appr. 10 % of the entire glueable surface area.

Upon sizing and gluing to a wall, the wall paper shown in figs. 1-3 behaves in a manner that fastening to the wall occurs essentially on a spot-gluing principle at island-shaped adhesive areas 3 which are more or less porous and, accordingly, the wall paper adheres more weakly at field 2 formed by the release layer outside said islands 3. Thus, it is relatively easy to manual ly remove the paper from the fastening surface at a later time.

When areas 3 are built by using a coating paste, such paste may contain a natural or synthetic binder, pigments, adjuvants such as a dispersing agent, alkali, one of the above-mentioned hydrophobicity promoting agents, hardeners, thickeners as well as anti-foaming agents and anti-deteriorants as well as generally all adjuvants which facilitate the processing of a paste. By varying the proportions of such agents, the dry matter content as well as viscosity of a paste while considering the quality of hydrophobic material 2 it is possible to regulate the surface structure and surface area of areas 3. The dosage of a paste can be used to regulate the proportion of areas 3 of the entire fastening surface area. By a proper selection of the above parameters it is possible to control the adhesive quality as desired with a certain combination of hydrophobic-hydrophilic materials, a certain paste and a certain fastening surface. The mode of application has also an effect on a final product. As an example, it can be pointed out that the amount 3 g/m$^2$ (as dry matter) of coating paste provides on the above polymer wax surface a paper which adheres firmly enough but is readily removable.

A suspension, such as a coating paste for providing the adhesive area, can be applied with conventional paper surface sizing or coating equipment, such as a size press, a roll coater, a bar, blade or air brush coater, by spraying or printing.

Fig. 4 further illustrates two paper backings of the invention which are produced by silk screen printing technique. The dark spots represent adhesive areas and by varying halftone percentage it is possible to produce a pattern shown in the upper figure with the adhesive in the form of dots (low halftone percent) or a mesh-like pattern shown in the lower figure (high halftone percent). It is also possible to produce intermediates of these patterns. An advantage gained by the method is that there will be a regular pattern formed by the adhesive on top of the release layer. The pattern can be shaped as desired (dots, squares, mesh pattern etc.).

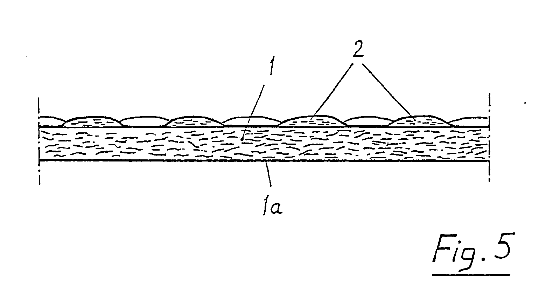

Fig. 5 shows still another embodiment of the invention as a cross-sectional view perpendicular to the plane of paper. In this case, silk screen printing is used to apply on top of a base web forming fibre layer 1 some material which is one of the above-mentioned agents building a release layer. The material builds on the glueable surface of paper backing the fields or areas 2, adjacent to which the exposed outer face of fibre layer 1 is visible. In the plane of paper there will also now be adjoining release agent fields 2 and more adhesive areas but, in this case, the more adhesive areas are formed by that outer face of fibre layer 1 which shall remain exposed from below the applied release agent. It is known that the outer face of a fibre layer is more hydrophilic that the surface of said release agent and, thus, the effect of the invention will be achieved with this arrangement as well. As for the patterns formed by release agent 2, the same viewpoints as those mentioned in reference to fig. 4 apply here also with the exception, however, that the dark areas in fig. 4 comprise release agent 2 applied by silk screen printing.

The outer face of fibre layer 1 can be bare (material saving) or it can also be coated prior to the application of a release agent, so that the resulting coated surface nevertheless has gluing qualities more adhesive than those of the release agent applied thereon.

The invention will now be further explained with a few examples which are by no means limiting in view of the scope of the invention.

Example I

Release surface:

Latex (Oulu-Latex 9210) (50%) 1 part
Wax dispersion (EFI 80/80) (30%) 1 part
- Application with air brush unit appr. 3 g/m$^2$ abs. dry coating.

4

| Adhesive surface : | | parts |
|---|---|---|
| Water | | 1.650,0 |
| NH₄OH | | 12,0 |
| NaOH | 50% | 1,3 |
| Dispersing agent (Polysalz S) | | 8,3 |
| Kaolin (SPS-kaolin) | 90% | 2.250,0 |
| Latex (National 1145-latex) | 50% | 450,0 |
| Hardener (Kenores 1420) | 80% | 45,0 |
| Wax dispersion (Wükonil PW) | 30% | 200,0 |
| Anti-foaming agent (Nopco NM 301) | | 0,5 |

- Application with a smooth rod appr. 3 $g/m^2$ of abs. dry coating, base paper 90 $g/m^2$ 1-layer raw wall paper.


Example II


Release surface:

Polymer wax dispersion (UKAFOB L-496 copolymer dispersion), dry matter content 30%
- Application with spiral wire rod appr. 3$g/m^2$ of abs. dry coating.

| Adhesive surface : | | parts |
|---|---|---|
| Water | | 1.100,0 |
| NH₄OH | | 6,0 |
| NaOH | 50% | 0,7 |
| Dispersing agent (Polysalz S) | | 4,5 |
| Kaolin (SPS-kaolin) | 90% | 1.500,0 |
| Latex (Dow latex 685) | 50% | 300,0 |
| Hardener (Kenores 1420) | 80% | 60,0 |

- Application with spiral wire rod appr. 3 $g/m^2$ of abs. dry coating, base paper 150 $g/m^2$ 2-layer base paper which was precoated with pigment on printing side.

Percentages in the examples express dry matter contents of material. The employed latexes are those generally used in paper making industry, e.g. polyvinylacetate- acrylate-based, ethyl-vinylacetate (EVA) based or styrene-butadiene- based latexes.

Referring to the above, the invention is by no means limited to the described alternatives but it can be modified within the scope of the inventive conception set forth in the claims. For example, it is possible to first apply on top of the fibres of base web 1 a continuous layer of some suitable adhesive agent which covers the fibres, followed by applying the hydrophobic agent on top said layer in a manner that the hydrophobic and hydrophilic areas will be adjacent to each other in the plane of paper.This is preferably done by the application of silk screen printing technique for obtaining a regular pattern. It should also be noted that the plural term "areas", unless specified in more detail, can refer either to individual islands or to a continuous mesh-like area or field, within which remain island-shaped areas or zones of another substance.

A paper of the invention is suitable for use on all appropriate paper fastening surfaces, such as wooden walls which may or may not be painted, including painted or non-painted board walls, chipboard walls, gypsum board walls as well as plastered or non-plastered stone walls. In addition, the glueable surface formed by release agent and hydrophilic agent can be covered by applying thereon a pre-paste layer to be wet with water at the time of gluing.


**Claims**

5

1. A paper strippable from a wall or a like fastening surface, such as a wall paper, a poster, a label or the like, carrying a release agent (2) on the glueable surface of its backing, **characterized** in that the backside glueable surface is adapted to carry an agent (3) which is more adhesive than said release agent (2).

2. A paper as set forth in claim 1, **characterized** in that the outer face of said glueable surface includes areas (2) of release agent and areas (3) of more adhesive agent adjacent to each other in the plane of paper.

3. A paper as set forth in claim 2, **characterized** in that said adhesive areas (3) are provided as individual islands surrounded by said area (2) of release agent.

4. A paper as set forth in any of claims 1-3, **characterized** in that said adhesive areas (3) consist of a material or agent applied on top of a base web (2).

5. A paper as set forth in any of claims 1-3, **characterized** in that the adhesive area is formed by the outer face of the backing partially covered by release agent areas (2), said outer face being exposed between areas (2).

6. A paper as set forth in claim 5, **characterized** in that the adhesive areas are formed by that section of the bare outer face of paper fibre layer (1) beneath the release agent, which section is exposed between said areas (2) of release agent.

7. A paper as set forth in any of claims 1-4, **characterized** in that the adhesive agent comprises an inorganic pigment and a natural or synthetic binder together or either one alone.

8. A paper as set forth in claim 7, **characterized** in that the adhesive agent comprises a dried, per se known paper coating paste.

9. A method for manufacturing a paper strippable from a wall or a like fastening surface, such as wall paper, a poster, a label or the like, in which method a release agent is applied to form a glueable surface for the backing, **characterized** in that the glueable surface is formed by applying, in addition to the release agent, some agent that is more adhesive than the release agent.

10. A method as set forth in claim 9, **characterized** in that said release agent and adhesive agent are arranged so as to build such outer face for the glueable surface which carries side by side areas (2) of release agent and areas (3) of adhesive agent.

11. A method as set forth in claim 10, **characterized** in that the adhesive agent is adapted to form individual islands surrounded by the release agent.

12. A method as set forth in any of claims 9-11, **characterized** in that to the paper backing is first applied a base web (2) of a release agent, followed by applying of said adhesive agent (3) on top of the base web.

13. A method as set forth in any of claims 9-12, **characterized** in that the adhesive agent is applied as a water-based, solids-containing suspension, which builds said individual area (3) upon drying.

14. A method as set forth in any of claims 9-13, **characterized** in that the adhesive agent comprises an inorganic pigment and a natural or synthetic binder together or either one alone.

15. A method as set forth in claim 14, **characterized** in that the adhesive agent is applied in the form of a per se known paper coating paste.

16. A method as set forth in any of claims 9-11, **characterized** in that the adhesive areas are formed by applying a release agent on top of a paper backing web in a manner that some of the outer face of said web remains exposed between areas (2) built by the release agent.

17. A method as set forth in claim 16, **characterized** in that the release agent is applied on top of the bare outer face of a paper fibre layer (1) in a manner that some of the bare outer face of said fibre layer remains exposed between areas (2) built by the release agent.

18. A method as set forth in any of claims 9-17, **characterized** in that the application of at least one of the agents is effected by means of silk screen printing technique.

_Fig. 1_

_Fig. 2_

3

2

_Fig. 3_

_Fig. 4_

_Fig.5_